# EUROPEAN PATENT SPECIFICATION

(11) **EP 2 449 218 B1**
(45) Date of publication and mention of the grant of the patent: **04.05.2016**
(21) Application number: 10740245.5
(22) Date of filing: 30.06.2010
(51) Int. Cl.: F01K 3/02, F01K 3/10, F28D 20/02

(54) **METHOD AND APPARATUS TO STORE ENERGY**
VERFAHREN UND VORRICHTUNG ZUR ENERGIESPEICHERUNG
PROCÉDÉ ET DISPOSITIF DE STOCKAGE D'ÉNERGIE

(30) Priority: 30.06.2009 GB 0911293
(43) Date of publication of application: 09.05.2012
(73) Proprietor: Whittaker Engineering (Stonehaven) Limited, Hindwells Stonehaven Aberdeenshire AB39 3UT (GB)
(72) Inventor: WHITTAKER, Kenneth, Aberdeenshire AB39 3UT (GB); ELLIS, David, Surrey CR0 5JU (GB)
(74) Representative: Brown, James Douglas
(86) International application number: PCT/GB2010/051081
(87) International publication number: WO 2011/001177

(56) References cited:
- US-A- 3 080 706
- US-A- 5 873 250
- US-A1- 2004 050 049
- US-A1- 2009 121 495

## Description

This invention relates to a method and apparatus to store energy.

The environmental concerns regarding greenhouse gases emitted from vehicles has driven a general drive to improve the efficiency of vehicles and look for alternative means of power.

The use of batteries to store energy for a variety of purposes is well known and in recent times the use of batteries for electrically powered vehicles has been developed. The batteries may be charged with power derived from environmentally sustainable energy sources or from power more efficiently obtained from large fossil fuel reactors.

One problem with batteries is that they deteriorate over time since successive charging and use of the battery deteriorates the chemicals in the battery and gradually reduces its power capacity.

The provision of power in an underwater environment also poses certain challenges. For example, to recover liquids, such as crude oil, from a sunken tanker the liquid may be heated in order to make it less viscous and more readily pumpable. However heating is particularly difficult at larger depths - indeed if the tanker is at a depth of more than 1000m then pumping steam to heat the liquid in the tanker is not practical.

The steam injection of oil wells is also a common practice to boost the well pressure and reduce the viscosity of the hydrocarbons, but such steam injection is also difficult to achieve for offshore wells at larger depths.

### Patent documents

US 5873250 and US 2004/0050049 are examples of using a phase change material to store energy.

According to a first aspect of the present invention there is provided a method to store energy, the method comprising:
(a) providing a phase change material, having a melting point of at least 500 °C, in a container;
(b) heating the phase change material to cause at least a portion thereof to melt and so store heat therein;
(c) storing the phase change material for a period of time being at least one minute;
(d) using at least a portion of heat from the phase change material (e)as a power source, wherein the portion of heat is used to heat at least one of water and steam in a steam generator to form a higher temperature stream of at least one of water and steam and the higher temperature stream is used as the power source, and wherein the higher temperature stream from the steam generator is directed to a secondary steam generator where relatively cold water/steam is added to the higher temperature stream from the stream generator in order to provide a combined stream of steam of an intermediate temperature, and
(e) moving the container and the phase change material from a first location to a second location, the first and second locations being spaced apart by at least 10 metres.

A phase change material is a substance with a high heat of fusion which by melting and solidifying or condensing and evaporating at a certain temperature is capable of storing and releasing large amounts of energy. Heat is absorbed or released when the material changes from solid to liquid and vice versa.

The phase change material is a high temperature phase change material, that is phase change material with a melting point of at least 500 °C, preferably more than 700 °C, typically around 800 °C and preferably less than 1000 °C.

The phase change material may comprise inorganic salts. The phase change material can consist of single high temperature salts such as lithium fluoride or a sodium carbonate or a blend of a number of different salts, such as lithium fluoride or a sodium carbonate, with different latent heat and thermal conductivity values. Other suitable phase change materials include lithium carbonate (Li₂CO₃), magnesium chloride (MgCl₂), sodium chloride (NaCl) and potassium chloride (KCI), or a mixture of compounds such as sodium fluoride NaF, magnesium fluoride MgF₂ or potassium fluoride KF or similar chemical blends.

In step (b), preferably the phase change material is heated by electricity directly with a heating element although it may be also be heated indirectly by an induction heater. Preferably it is heated until it has all transformed into the liquid phase. For certain embodiments, the phase change material can also be heated geo-thermally or by off peak power or solar energy.

Thus according to the invention the phase change material may be used to store heat for use at a later time. Whilst the period if time is at least one minute, it can be much longer: typically more than 1 hour, optionally more than 2 hours, perhaps more than 6 or 12 hours, or more than a day or longer.

Preferably a heat transfer fluid (which may be vapour, gas, or liquids) transfers the heat from the phase change material to the power source. The heat transfer fluid may be a transfer vapour and/or transfer gas such as liquid sodium which vaporises and condenses. A heat pipe may alternatively or additionally be used.

The power source may be for a Stirling engine. Thus embodiments of the invention use the heat stored in a phase change material to power a Stirling engine. A Stirling engine is one which is a heat engine which operates on the expansion and combustion of gas.

According to a further aspect of the invention there is provided a method to store energy, the method comprising:
(a) heating a phase change material to cause at least a portion thereof to melt and so store heat therein;
(b) storing the phase change material for a period of time being at least one minute;
(c) using at least a portion of heat from the phase change material to heat at least one of water and steam to form a higher temperature stream of at least one of water and steam;
(d) using the higher temperature stream as a power source.

Preferably the higher temperature stream is formed indirectly, through the use of an intermediate heat transfer fluid. That is, preferably the heat transfer fluid is heated by the phase change material and the heat transfer fluid in turn heats the water and/or steam to form the higher temperature stream. The heat transfer fluid according to either of the above aspects will in turn be cooled by the heating of the water/steam and typically returns to be heated again by the phase change material. Thus a circuit of heat transfer fluid is preferably provided between an area where it is heated by the phase change material and an area where it heats water/steam. The heat transfer fluid is may be an oil and preferably can work pressurised or un-pressurised with or without an inert gas buffer. One example of an oil that is suitable for 400 °C is sold under the name Therminol VP-1 Vapor Phase/Liquid Phase Heat Transfer Fluid by Therminol, St. Louis, USA.

Typically the portion of the circuit where the water/steam is heated is a steam generator. Typically the steam generator produces steam but may produce water and so references hereinafter to steam may also include pure water or a mixture of water and steam. The steam from the higher temperature stream from the steam generator is typically at a temperature of more than 200 °C, indeed normally more than 400 °C, often more than 700 °C. Similarly the steam generator may heat steam to make higher temperature steam and for such embodiments may be more properly described as a "steam heater"; nevertheless for brevity it is referred to as a steam generator herein and this should be construed to include a "steam heater".

In preferred embodiments, a mono-tube steam generator is used. For such embodiments, a smaller volume of steam may be at high pressure at any one time, making the method safer compared to the use of a traditional steam boiler which may have a much higher volume of steam at high pressure. Preferably therefore the steam generator is based on an Abner Doble type steam generator. Moreover preferably the method does not include the use of a steam boiler, especially for embodiments where the power source propels a vehicle comprising the phase change material.

The combined stream of steam may have an intermediate temperature of typically 200 °C - 350 °C, and preferably 250 °C - 300 °C.

In alternative embodiments, the higher temperature stream may bypass the secondary steam generator. Preferably the stream from the secondary steam generator and the bypass are combined downstream.

The secondary steam generator may be a steam de-superheater.

Steps (b), (c) and (d) of the present invention are preferably a continuous process, especially steps (c) and (d). That is, preferably a portion of phase change material is being stored, step (b), whilst a further portion is being used to heat the steam/water, step (c), whilst a further portion of steam is being used as a power source, step (d). The addition of heat to the phase change material, step (a), may also be part of this continuous process but more normally step (a) is preformed only intermittently compared to steps (b) to (d).

This heating, step (a), and cooling, step (c), of the phase change material may be repeated, indefinitely if required and so does not suffer from reduced power capacity.

The power source can be directed to do different kinds of work, such as run a turbine, an engine, direct or indirect heating, for cleaning purposes, or for heating a liquid such as crude oil of a sunken tanker.

Typically the phase change material is provided in a container. The container is normally insulated.

Preferably the method of the invention involves moving the container and the phase change material, and typically the steam generator and the secondary steam generator, from a first location to a second location. The first and second locations are spaced apart by at least 10m, typically at least 100m, preferably at least 1000m and may be spaced apart by more than 2000m.

In a first embodiment, the movement allows the phase change material and power source derived therefrom to be proximate to the point where the power is required. For example the phase change material can be lowered or powered to the work site where the heat energy can be used as is or converted into other forms of power.

In a second embodiment the power source obtained in accordance with the present invention may at least contribute to the power required to move a vehicle comprising the phase change material and typically the container, steam generator and secondary steam generator.

Thus the invention may comprise the step of using the power source to move the phase change material which is storing the heat and so the movement of the container from a first location to a second location may be concurrent with using the higher temperature stream as a power source and this higher temperature stream may indeed contribute to the power required for movement between the first location and the second location.

In a first embodiment, the phase change material is heated, typically on a vessel, and then a housing comprising the container with the phase change material, the circuit and steam generator and secondary steam generator are moved from the first location, such as on the vessel, to the second location, such as deployed subsea, typically at a depth of more than 100m, often more than 1000m.

Thus the steam may then be generated and used as a power source at or proximate to the second location, such as for steam well injection or to recover crude from a sunken tanker. Thus step (e) of the first aspect is sometimes performed before step (d) of the first aspect. A number of phase change material containers can be exchanged from surface to subsea when they become depleted of heat and re-charged topside.

To recover crude or other liquid such as chemicals, a remotely operated vehicle (or a diver) can create at least one sealed hole in the crude oil tank of a sunken tanker, preferably forming a so-called hot-stab connection, and insert a heat exchange conduit. The phase change material then heats a water source (such as sea water) to provide steam which is then circulated into the heat exchange conduit. The warmed and less viscous crude oil may then be recovered by pumping.

In an alternative embodiment the phase change material may be used to power a turbine or power a vehicle. For such an embodiment the housing comprising the container with the phase change material, the circuit and steam generator and secondary steam generator are provided in a vehicle. The phase change material is heated by any suitable means, such as a heater connected to mains electricity or solar energy. Steam is generated as described above and directed to a steam engine which propels the vehicle from the first location to the second location.

A separate phase change material container with phase change material may also be substituted for the heat depleted phase change material. In this way one container with phase change material, step (a), may be heated offline, whilst steps (b) to (d) especially steps (c) to (d) and more especially step (d), is performed simultaneously using heat derived from a separate phase change material container and phase change material. In this way there is no need for the power source derived from the method of the invention, step (d), to be paused when the phase change material is being heated, step (a).

For certain applications, the steam may be expelled in order to provide a power source. For example, it may be injected into an oil well. It may be added to crude oil in a sunken tanker to reduce its viscosity. It may be used to clean areas or for any other reason, or used in a steam engine where the steam is allowed to exhaust. The temperature of the steam can be varied from delivering superheated steam to hot water.

In other applications the steam is recovered (after use as a power source) at a lower temperature or pressure, typically a lower temperature. For example it may be used in a heat exchanger conduits to provide heat to a colder material, especially a colder fluid, without coming into direct contact with the colder material. For example, the steam may be circulated in the heat exchanger conduits in a crude oil tank of a sunken tanker in order to heat the crude oil, reduce its viscosity to allow it to be pumped and recovered more easily. This is normally preferred to adding the steam directly into the crude oil since it may not be possible to increase the pressure in the crude oil tank significantly as it may cause a leak of crude oil or lead to dangerously high pressures in the tank. Similarly solids having suitably low melting temperatures may be recovered in this way, for example waxes.

The steam may also be recovered after use in a steam engine. A suitable device is provided to recover the steam, such as a condenser.

Where the steam is recovered it may be recirculated back to the steam generator or secondary steam generator.

Thus for certain embodiments the steam used as the power source is preferably recovered, condensed and directed back to the steam generator or secondary steam generator. Indeed for embodiments comprising a steam engine, this is preferred.

The power may also be used as portable heat for cooking, hot air ducting, heating gasses, gas drying, kiln drying, hot air balloon, chemical heating, de-frosting, sterilization or blast drying.

Thus embodiments of the invention may be used from a variety of purposes including but not limited to heating up oil or chemicals in sunken vessels to aid oil extraction pumping; steam cleaning of tank internals and external surfaces of sunken vessels for environmental reasons; steam cleaning or subsea pipelines, structures, equipment etc; steam injection for well stimulation; steam injection into subsea risers and pipelines; subsea steam turbine or reciprocating steam engine.

The heat energy can be used as is or converted into a number of different forms of energy including steam driven linear actuators, steam driven linear generators, powering inflatable containers or lifting devices, powering thermocouples, pre-heating of metals prior to welding, forming, fitting, swaging etc., well stimulation, heating or producing steam in a spark free environment as well as subsea heating of fluids and solids.

According to a third aspect of the invention there is provided a vehicle comprising a mechanism adapted to extract heat from a phase change material typically at a temperature of at least 500 °C and use said heat as a power source; a steam generator powered by the phase change material; a secondary steam generator, the secondary steam generator is provided downstream of the steam generator and connected thereto, and adapted to reduce the temperature of the steam provided by the steam generator, and operable to move the vehicle from a first location to a second location, the first and second locations being spaced apart by at least 10 metres.

Preferably the vehicle according to the further aspect of the invention is used in the method according to earlier aspects of the invention.

The phase change material may be provided separate to the vehicle, optionally heated outside the vehicle and transferred thereto for use.

Alternatively the vehicle may comprise a container comprising the phase change material.

The vehicle may comprise a Stirling engine.

Thus according to a fourth aspect of the invention there is provided an apparatus for storing heat, the apparatus comprising:
a container having phase change material;
a steam generator connected to the container;
an energy output system.

Preferably the apparatus according to the third aspect of the invention is used with the methods according to first and second aspects of the invention.

The apparatus may be a vehicle optionally in accordance with the third aspect of the invention.

Typically the apparatus has a heating element and this is preferably provided with the container.

Preferably a conduit is provided to transfer fluid from the container to the steam generator/steam heater. Preferably the conduit is a circuit and so can circulate fluid from the container to the steam generator and back to the container. Typically a pump is provided to move the fluid.

Preferably the apparatus comprises a secondary steam generator which may be a steam de-superheater.

Typically a further steam/water input is provided on the secondary steam generator and valves are provided in order to control the flow into the secondary steam generator from one or both of the upstream steam generator and a steam/water source.

A bypass is preferably provided around the secondary steam generator and typically controlled with valves to allow steam from the steam generator to bypass the secondary steam generator in order to provide for temperature and/or pressure control downstream of the secondary steam generator.

The energy output system may comprise at least one of a steam output, a heat exchanger, a turbine and an engine. Typically the energy output system comprises a throttle valve.

Thus for certain embodiments the apparatus may comprise a steam turbine or a steam engine. The steam engine can be used directly to provide traction or indirectly to produce electricity, hydraulic power etc.

In alternative embodiments, the apparatus may comprise a heat engine, such as a Stirling engine.

Thus the apparatus may comprise an energy output system.

The invention thus provides a vehicle comprising the apparatus according to the second aspect of the invention.

The steam or hot water can be used in a total loss system or through a heat coil(s) and the hot water re-circulated. Thus whilst certain embodiments, in use, expel steam, for other embodiments, such as those which have the option for using steam in a different way, such as in a heat exchanger or in an engine, a condenser is preferably included in the apparatus, and it is adapted to recover at least a portion of the steam.

Conduits regulated by valves and/or pumps are preferably provided in order to recirculate the condensed steam back to at least one of the steam generator and secondary steam generator.

A control system is typically provided to manipulate the apparatus so that the steam temperature is regulated to provide the optimum temperature to suit the steam engine. The control system can normally control all said valves and pumps in addition to other controls where deemed necessary.

Thus embodiments of the invention can use the heat energy as a fuel for vehicular use or it can be used to transfer heat from one location to another then use the heat for a variety of different uses.

An embodiment of the present invention will now be described, by way of example only, with reference to the accompanying drawings, in which:
Fig. 1 is a schematic representation of a subsea steam generation system;
Fig. 2 is a schematic representation of a power system for a vehicle; and,
Fig. 3 is a schematic representation of a power system comprising a Stirling engine in accordance with a further aspect of the present invention.

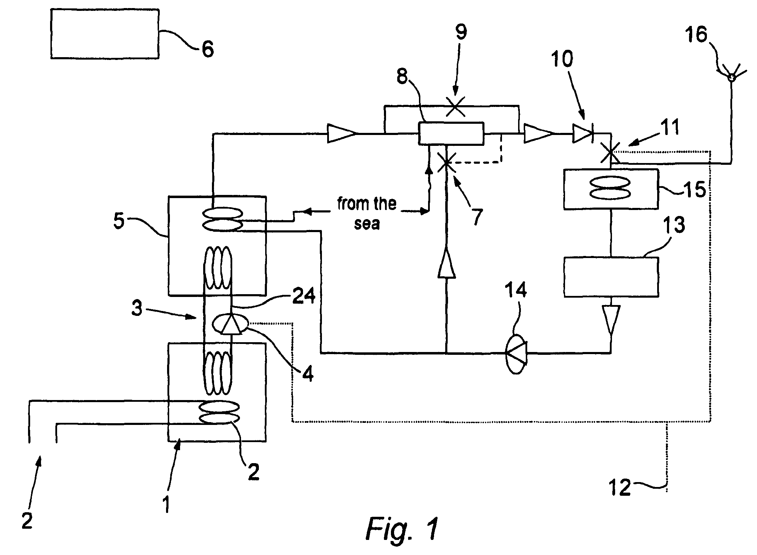

A first embodiment of the apparatus is shown in Fig. 1 which comprises a container 1 which, in use, has phase change material (PCM) provided therein. A heater 2 provided in the container 1 heats the PCM during use. A pump 4 is provided to circulate oil (heated by the phase change material) from the container 1 to a steam generator 5. The steam generator 5 receives water from the sea, or a downstream condenser, and is in turn connected to de-superheater 8, which converts extremely high temperature steam from the steam generator (for example at a temperature of 800 °C) to a greater volume of steam at a relatively low temperature, such as 250 - 300 °C. A bypass 9 is provided to bypass the de-superheater 8, and following a non return valve 10 and a throttle valve 11, the steam is expelled through a steam lance 16 and/or injected into a heat exchanger coil 15.

The provision of heat/steam from the Fig. 1 embodiment will now be described in more detail. An overall control system 6 is provided to control the generation of steam. First, the phase change material is heated in the container 1 by the heater 2 until it has melted. The phase change material has a large heat capacity and can store this energy for a period of time. In particular when the phase change material changes phase from solid to liquid, it absorbs a significant amount of energy.

The container 1 can vary in size depending on the application and duty cycle. It is fabricated from a high temperature and high corrosion resistant material such as Haynes 242 or ceramic and well insulated by any suitable means to reduce heat loss. Graphite conduction fins (not shown) are provided inside the container 1 to increase the charge and discharge rate of the PCM. Other high thermal conductivity temperature material or device may be used in place of the graphite fins.

For embodiments where the system is provided on a vessel, the heater 2 may be powered by the vessel's own generators, auxiliary generators or by dockside power. The heater 2 in the container 1 transfers the electrical power through a direct coil in the PCM, by a heat pipe or by an external induction heating coil, such as those manufactured by EFD Induction Heaters (Wolverhampton, UK).

When steam output from the system is required, high temperature heat transfer fluid comprising oil (or other heat transfer fluid e.g. lithium nitrate or including heat gas/vapour) is circulated from the container 1 into the steam generator 5 by the pump 4 and circuit 24. The heat transfer fluid is pumped, throttled or regulated by the control system 6. The fluid is thus heated by the phase change material and transfers this heat to the steam generator 5. The cooled fluid returns to the container 1. Instead of heating oil, other heat transfer fluid may be used such as LiNO₃. or heat pipe using for example sodium liquid/vapour cycle. The heating circuit 24 is fabricated from a high temperature and high corrosion resistant material such as Hastelloy N. The pump 4 may be any suitable pump, for example, a type normally used as an oil circulation pump.

In certain embodiments the phase change material may be circulated directly into the steam generator but this would cause extra heat stress for the circuit 24 and would afford less control of the overall system. Thus it is preferred to use another conductor, such as the heat transfer fluid described above. Water from the sea or any other source is added to the steam generator 5 (further water from condensed steam downstream may be reinjected into the steam generator). The steam generator 5 uses a configuration of heat exchanger coils to produce the steam and works on the principal as developed by Abner Doble. Steam is sent from the steam generator 5 at a temperature of around 800 °C. Normally this is of a higher temperature than required, and so the volume of steam may be increased by using the high temperature steam to evaporate more water in the secondary steam generator or de-superheater 8.

The temperature of the steam emanating from the de-superheater 8 may be controlled by a control valve 7 and the de-superheater bypass valve 9, closing the latter reduces the temperature of the steam by allowing the de-superheater 8 to operate. The temperature control valve 7 and bypass valve 9 are controlled by the control system 6. The control system 6 has the capability to change parameters that the temperature control valve 7 and the de-superheater by-pass valve 9 operate at to achieve optimum performance of the system at all times.

The combined steam flow, now at a temperature of 250 - 300 °C, proceeds via the non-return valve 10 and throttle 11 and is ejected via the steam lance 16. The non-return valve 10 prevents the sea water at depth creating a back pressure through the system.

The throttle valve 11 regulates the quantity of steam being delivered, and is controlled by the throttle control 12 which works in conjunction with the circulation pump 4 and the control system 6.

For certain applications, it may be required or preferred to recover the steam. Moreover for certain applications the addition of steam would not be preferred - merely the addition of heat is required. For example, one application of the Fig. 1 embodiment is to recover crude oil from a sunken tanker (not shown). As the crude oil is difficult to pump due to its thick viscosity, steam may be added to heat up the crude oil and reduce its viscosity so that it may be pumped. However the additional pressure created by the additional steam may be dangerous. For such embodiments, holes may be drilled into the tanker and heat exchanger coils 15 inserted and the hole sealed. Steam is then circulated through the coils 15 and the crude oil heated then pumped at a lower viscosity.

Heat exchanger coils 15 are shown in Fig. 1. Steam is directed to the heat exchanger coils which then allows the heat to dissipate away from the coils, for example into crude oil of a sunken tanker. The condensed steam is recovered in the condenser 13 which drops the temperature of the steam allowing it to be pumped and re-circulated as hot water through the hot water pump 14 and recirculated back to the steam generator 5 or steam de-superheater 8.

Certain embodiments may only have a steam lance, or may only have heat exchanger coils, but preferred embodiments, such as the one shown in Fig. 1, have both and so the steam may be directed by the user controlling the throttle valve 11 to either a steam lance 16 or heat exchanger coil 15 or a combination thereof

The control system 6 monitors and controls all the variable functions of the Fig. 1 embodiment. The control system is computer controlled with programmable software and so it can predict and intuitively assess the most logical set of parameters to suit a particular set of circumstances. The throttle valve 11 controls the volume of steam before the heat exchanger coils 15 or lance 16 and at an inlet to the steam generator 5.

The steam lance 16 can be used for cleaning purposes or in situations where steam or hot water cannot reach or there is no requirement to re-circulate.

The various components may be sourced from a number of suppliers. A suitable control system may be supplied by Moog controls, Tewkesbury, United Kingdom.

One suitable supplier of the temperature control valve 7, de-superheater 8, de-superheater by-pass valve 9, non-return valve 10 and throttle valve 11, hot water pump 14 is Spirax/Sarco Cheltenham, United Kingdom.

The condenser 13 may be supplied by Ambassador Heat Transfer Co, Cincinnati, USA.

One suitable supplier of the heat exchanger coil 15 and/or steam lance 16 is Whittaker Engineering (Stonehaven, United Kingdom).

The phase change material is selected to suit the application ranging from low temperature salts to high temperature salts. Preferred embodiments use high temperature phase change materials such as lithium fluoride (LiF), sodium carbonate (Na₂ CO₃) lithium carbonate (Li₂CO₃), magnesium chloride (MgCl₂), sodium chloride (NaCl) and potassium chloride (KCI) and mixtures of compounds such as sodium fluoride NaF, magnesium fluoride MgF₂ or potassium fluoride KF that may or may not form a eutectic solution.

A second embodiment of the present invention comprises a vehicle powered by a steam engine which is in turn powered by steam generated by the cooling of phase change material.

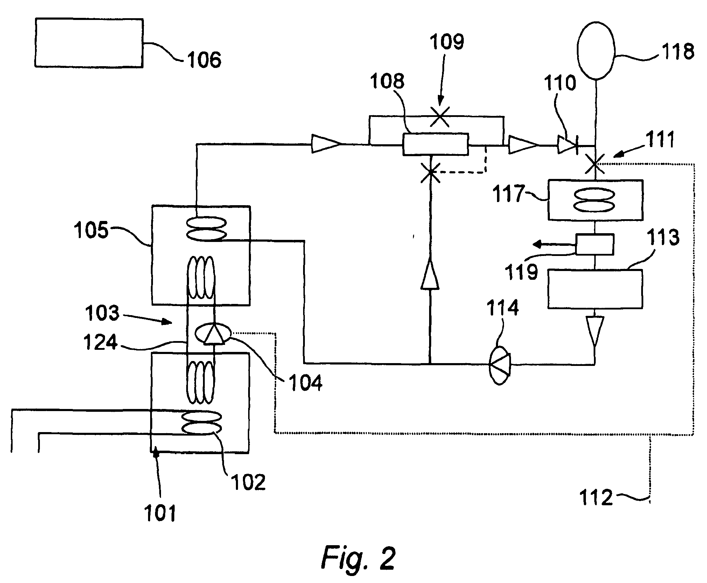

The circuit used to create the steam for the vehicle embodiment is shown in Fig. 2 and shares many similar features to those described above for the first embodiment - these features sharing common reference numerals but starting at 100. Whilst in practice these may be of different sizes to suit their particular application, their function is the same unless described in more detail below.

Thus phase change material is heated in the container 101 by heating elements 102. The power for the heating elements in the container 101 may be supplied form a variety of different sources including mains electricity from nuclear power, solar power, thermal power, wind power, wave power, any renewable power source or from hydrocarbons. A circulation pump 104 circulates high temperature heat transfer fluid to a steam generator 105 where heat from the phase change material, via the fluid, is used to form very high temperature steam from any suitable water source. The cooled fluid returns to the container 101. Steam from the steam generator 105 is directed, via a temperature control valve 107, to a de-superheater 108 where the temperature of the steam from the steam generator 105 is reduced to form more steam. A control system may switch the steam from the steam generator 105 to bypass the de-superheater 108 by opening the de-super bypass valve 109. After the de-superheater 108 or bypass 109, the steam is directed to a throttle valve 111 which regulates the quantity of steam being delivered to a downstream steam engine 117 and steam receiver 118.

The steam receiver 118 is an accumulator where a small volume of steam is stored to ensure there is no throttle lag between steam generation and response.

The steam engine 117 may be a turbine engine or a reciprocating piston engine. A reciprocating piston engine can power the wheels indirectly as above or directly with or without a gearbox. One suitable supplier of a steam engine comprising a reciprocating piston engine may be supplied by Whittaker Engineering, *supra.*

In an alternative embodiment, a steam turbine may be provided which generates electricity which then powers the vehicle directly through a gearbox (not shown) or through electric motors, or can power a hydraulic power unit which in turn powers hydraulic motors to the wheels. One suitable supplier of a steam turbine engine is Nestco, Spencer, USA.

Steam from the engine 117 is used by the waste steam turbine 119 to drive an auxiliary turbine which can be used to generate auxiliary power for the vehicle. One suitable supplier for the waste heat turbine is Global Energy and Infinity Turbine LLC Madison, USA.

The waste heat from the waste heat turbine 119 or directly from the steam engine 117 runs through a condenser 113 to convert the steam into hot water thereby allowing the waste heat to be re-circulated back into either the de-superheater 108 or steam generator 105 or both.

The throttle 112 controls the volume of steam before the steam engine 117 and at the inlet to the steam generator 105.

Thus a vehicle (not shown) can be provided with a circuit described as shown in Fig. 2. The phase change material may be heated before use by connection to mains electricity or at special charging points dependant on the size of the PCM and the duty cycle of the vehicle. Preferred embodiments of the vehicle are charged by electricity made from renewable energy sources. In this way the running of the vehicle does not produce any harmful emissions. Indeed, for preferred embodiments, the steam engine system captures the steam and recycles it and so no steam is emitted either, a large water supply is not required and residual heat in the condensed water may be usefully recovered. The no-emission vehicle of certain embodiments of the present invention is ideally suited for an urban environment.

The system may be used with small private vehicles or large vehicles. Heavy use vehicles, such as public buses, are particularly suitable for use with the Fig. 2 embodiment of the present invention.

A further advantage of certain embodiments of the invention is that a PCM powered vehicle can operate in a spark free hazardous environment.

A further advantage of the Fig. 2 embodiment is that the phase change material may be heated by a power source and cooled to produce the steam on multiple occasions without losing its heat storage properties and thus without reducing the amount of steam and therefore power that may be produced by the vehicle. In contrast, battery powered vehicles suffer from the reduction in power supplied by the battery after each charge and recharge.

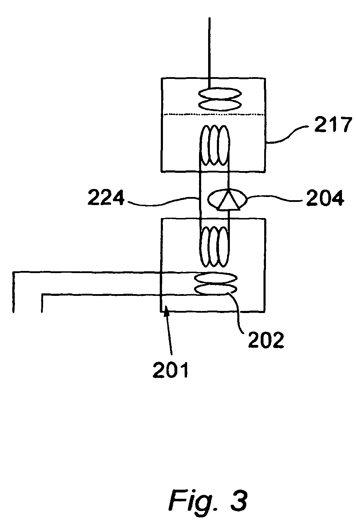

An alternative embodiment is shown in Fig. 3. Similar components to the previous embodiments share common reference numerals except starting at 200. In the Fig. 3 embodiment the circulation pump 204 directly heats a gaseous working fluid in a Stirling-type engine 217 thus normally not involving steam. This can be used in place of the separate steam generator described in earlier embodiments and thus the Fig. 3 embodiment is equally suited to a subsea application (Fig. 1 embodiment) and vehicle propulsion (Fig. 2 embodiment).

An advantage of preferred embodiments is that the system does not include a steam boiler and so avoids the presence of a high pressure unit, which improves safety of the system. Instead the steam is produced by a steam generator contains a low volume of high-pressure steam, as per Abner Doble's invention, and the pressure can be quickly reduced to zero. A steam boiler by contrast would produce steam using a high volume of high-pressure steam, as in a steam train and this high volume of high pressure steam is potentially explosive in the event of a containment or control failure.

## Claims

1. A method to store energy, the method comprising:
(a) providing a phase change material, having a melting point of at least 500 °C, in a container (1, 101);
(b) heating the phase change material to cause at least a portion thereof to melt and so store heat therein;
(c) storing the phase change material for a period of time being at least one minute;
(d) using at least a portion of heat from the phase change material as a power source, wherein the portion of heat is used to heat at least one of water and steam in a steam generator (5, 105) to form a higher temperature stream of at least one of water and steam and the higher temperature stream is used as the power source, and wherein the higher temperature stream from the steam generator is directed to a secondary steam generator (8, 108) where relatively cold water/steam is added to the higher temperature stream from the steam generator in order to provide a combined stream of steam of an intermediate temperature, and
(e) moving the container and the phase change material from a first location to a second location, the first and second locations being spaced apart by at least 10 metres.

2. A method as claimed in claim 1, wherein the phase change material comprises any one or more of lithium fluoride, sodium carbonate, lithium carbonate, magnesium chloride, sodium chloride and potassium chloride, and wherein the period of time is more than 1 hour, and may be more than 2 hours, 6 hours or more than 12 hours.

3. A method as claimed in any preceding claim, wherein a heat transfer fluid transfers the heat from the phase change material to the power source, the heat transfer fluid provided in a circuit (24, 124) moveable between an area where it is heated by the phase change material and an area where it transfers heat to the power source.

4. A method as claimed in any preceding claim, wherein the power source generated in step (d) provides at least some of the power required to move the container and the phase change material from the first location to the second location, and wherein at least a portion of the power source in step (d) is generated at or proximate to the second location, and wherein the second location is subsea, at a depth of at least 100m, preferably at least 1000m, more preferably at least 1800m; whilst step (b) may be on a vessel.

5. A method as claimed in any preceding claim, wherein two containers each comprising phase change material are provided; step (b) is performed off line to one of the said containers whilst step (d) is performed using heat derived from the phase change material in the second said container; and wherein the first and second locations are spaced apart by at least 100m, more preferably at least 1000m and may be spaced apart by more than 2000m; and wherein step (b) is performed less frequently compared to step (d).

6. A method as claimed in any preceding claim, wherein steam is heated to form a higher temperature stream of steam, and wherein the higher temperature stream from the steam generator is at a temperature of more than 200 °C, preferably more than 400 °C, especially more than 700 °C, and wherein said intermediate temperature is preferably in the range of from 200 °C to 350 °C.

7. A method as claimed in any preceding claim, wherein the higher temperature stream is used as a power source by injecting the steam into a well.

8. A method as claimed in any preceding claim, wherein the higher temperature stream is used as a power source by heat exchange with a viscous liquid in a submerged container, preferably indirect heat exchange, and wherein the viscous liquid comprises hydrocarbons and the submerged container is a sunken vessel.

9. A method as claimed in any preceding claim, comprising recovering at least a portion of the steam as steam or water, and optionally using the recovered steam/water to repeat the step of forming a higher temperature stream of at least one of water and steam, and the higher temperature stream being used as the power source.

10. A vehicle comprising:
a mechanism adapted to extract heat from a phase change material at a temperature of at least 500 °C and use said heat as a power source;
a steam generator (105) powered by the phase change material;
a secondary steam generator (108), the secondary steam generator is provided downstream of the steam generator and connected thereto, and adapted to reduce the temperature of steam provided by the steam generator,
and the vehicle being operable to move the vehicle from a first location to a second location, the first and second locations being spaced apart by at least 10 metres.

11. Vehicle as claimed in claim 10, comprising a container (101) comprising phase change material and/or an energy output system (117) having at least one of a steam output, a heat exchanger, a turbine and an engine.

12. Vehicle as claimed in any one of claims 10 to 11, wherein the heat stored by said mechanism is used to move the vehicle from the first location to the second location.

13. Vehicle as claimed in any one of claims 10 to 12, wherein the power source is operable to power a Stirling engine.

14. Vehicle as claimed in claims 10 to 13, wherein the steam generator comprises a mono-tube steam generator.

15. Vehicle as claimed in claim 10 or 14, wherein a conduit is provided to transfer fluid from the container to the steam generator and wherein the conduit is a circuit (124) and so is configured to circulate fluid from the container to the steam generator and back to the container.

## Patentansprüche

1. Ein Verfahren zum Speichern von Energie, wobei das Verfahren Folgendes beinhaltet:
(a) Bereitstellen eines Phasenwechselmaterials mit einem Schmelzpunkt von mindestens 500 °C in einem Behälter (1, 101);
(b) Erwärmen des Phasenwechselmaterials, um zu bewirken, dass mindestens ein Teil davon schmilzt und so Wärme in sich speichert;
(c) Speichern des Phasenwechselmaterials für einen Zeitraum von mindestens einer Minute;
(d) Verwenden mindestens eines Teils der Wärme aus dem Phasenwechselmaterial als eine Energiequelle, wobei der Teil der Wärme zum Erwärmen mindestens eines von Wasser und Dampf in einem Dampferzeuger (5, 105) verwendet wird, um aus mindestens einem von Wasser und Dampf einen Fluss höherer Temperatur zu bilden, und wobei der Fluss höherer Temperatur als die Energiequelle verwendet wird, und wobei der Fluss höherer Temperatur von dem Dampferzeuger zu einem sekundären Dampferzeuger (8, 108) geleitet wird, in dem relativ kaltes Wasser/relativ kalter Dampf dem Fluss höherer Temperatur von dem Dampferzeuger zugegeben wird, um einen kombinierten Dampffluss einer mittleren Temperatur bereitzustellen, und
(e) Bewegen des Behälters und des Phasenwechselmaterials von einer ersten Stelle zu einer zweiten Stelle, wobei die erste und zweite Stelle um mindestens 10 Meter voneinander beabstandet sind.

2. Verfahren gemäß Anspruch 1, wobei das Phasenwechselmaterial eines oder mehrere von Lithiumfluorid, Natriumcarbonat, Lithiumcarbonat, Magnesiumchlorid, Natriumchlorid und Kaliumchlorid beinhaltet und wobei der Zeitraum mehr als 1 Stunde beträgt und mehr als 2 Stunden, 6 Stunden oder mehr als 12 Stunden betragen kann.

3. Verfahren gemäß einem der vorhergehenden Ansprüche, wobei ein Wärmeübertragungsfluid die Wärme von dem Phasenwechselmaterial auf die Energiequelle überträgt, wobei das Wärmeübertragungsfluid in einem Kreislauf (24, 124) bereitgestellt ist, beweglich zwischen einem Bereich, in dem es durch das Phasenwechselmaterial erwärmt wird, und einem Bereich, in dem es Wärme auf die Energiequelle überträgt.

4. Verfahren gemäß einem der vorhergehenden Ansprüche, wobei die in Schritt (d) erzeugte Energiequelle mindestens einen Anteil der zum Bewegen des Behälters und des Phasenwechselmaterials von der ersten Stelle zu der zweiten Stelle erforderlichen Energie bereitstellt, und wobei mindestens ein Teil der Energiequelle in Schritt (d) an oder nahe der zweiten Stelle erzeugt wird, und wobei sich die zweite Stelle unterseeisch, in einer Tiefe von mindestens 100 m, vorzugsweise mindestens 1000 m, noch bevorzugter mindestens 1800 m befindet, während Schritt (b) auf einem Wasserfahrzeug stattfinden kann.

5. Verfahren gemäß einem der vorhergehenden Ansprüche, wobei zwei jeweils Phasenwechselmaterial beinhaltende Behälter bereitgestellt werden; Schritt (b) getrennt an einem der Behälter durchgeführt wird, während Schritt (d) unter Verwendung von Wärme, die aus dem Phasenwechselmaterial in dem zweiten Behälter stammt, durchgeführt wird; und wobei die erste und zweite Stelle um mindestens 100 m, noch bevorzugter mindestens 1000 m beabstandet sind und um mehr als 2000 m beabstandet sein können; und wobei Schritt (b) weniger oft als Schritt (d) durchgeführt wird.

6. Verfahren gemäß einem der vorhergehenden Ansprüche, wobei Dampf erwärmt wird, um einen Dampffluss höherer Temperatur zu bilden, und wobei der Fluss höherer Temperatur von dem Dampferzeuger bei einer Temperatur von mehr als 200 °C, vorzugsweise mehr als 400 °C, besonders mehr als 700 °C, liegt und wobei die mittlere Temperatur vorzugsweise in der Spanne von 200 °C bis 350 °C liegt.

7. Verfahren gemäß einem der vorhergehenden Ansprüche, wobei der Fluss höherer Temperatur durch Einspritzen des Dampfes in ein Bohrloch als eine Energiequelle verwendet wird.

8. Verfahren gemäß einem der vorhergehenden Ansprüche, wobei der Fluss höherer Temperatur durch Wärmeaustausch mit einer viskösen Flüssigkeit in einem untergetauchten Behälter, vorzugsweise durch indirekten Wärmeaustausch, als eine Energiequelle verwendet wird, und wobei die visköse Flüssigkeit Kohlenwasserstoffe beinhaltet und der untergetauchte Behälter ein gesunkenes Wasserfahrzeug ist.

9. Verfahren gemäß einem der vorhergehenden Ansprüche, das das Wiedergewinnen mindestens eines Teils des Dampfes als Dampf oder Wasser und optional das Verwenden des wiedergewonnenen Dampfes/Wassers zum Wiederholen des Schrittes des Bildens eines Flusses höherer Temperatur aus mindestens einem von Wasser und Dampf beinhaltet, und wobei der Fluss höherer Temperatur als die Energiequelle verwendet wird.

10. Ein Fahrzeug, das Folgendes beinhaltet:
einen Mechanismus, der angepasst ist, um Wärme aus einem Phasenwechselmaterial bei einer Temperatur von mindestens 500 °C zu extrahieren und die Wärme als eine Energiequelle zu verwenden;
einen Dampferzeuger (105), der durch das Phasenwechselmaterial angetrieben wird;
einen sekundären Dampferzeuger (108), wobei der sekundäre Dampferzeuger stromabwärts des Dampferzeugers bereitgestellt und damit verbunden ist und
angepasst ist, um die Temperatur des von dem Dampferzeuger bereitgestellten Dampfes zu reduzieren,
und wobei das Fahrzeug betriebsfähig ist, um das Fahrzeug von einer ersten Stelle zu einer zweiten Stelle zu bewegten, wobei die erste und zweite Stelle um mindestens 10 Meter voneinander beabstandet sind.

11. Fahrzeug gemäß Anspruch 10, das einen ein Phasenwechselmaterial beinhaltenden Behälter (101) und/oder ein Energieausgabesystem (117) mit mindestens einem von einem Dampfausgang, einem Wärmeaustauscher, einer Turbine und einem Motor beinhaltet.

12. Fahrzeug gemäß einem der Ansprüche 10 bis 11, wobei die durch den Mechanismus gespeicherte Wärme verwendet wird, um das Fahrzeug von der ersten Stelle zu der zweiten Stelle zu bewegen.

13. Fahrzeug gemäß einem der Ansprüche 10 bis 12, wobei die Energiequelle betriebsfähig ist, um einen Stirlingmotor anzutreiben.

14. Fahrzeug gemäß den Ansprüchen 10 bis 13, wobei der Dampferzeuger einen Einrohrdampferzeuger beinhaltet

15. Fahrzeug gemäß Anspruch 10 oder 14, wobei eine Leitung zum Überführen von Fluid aus dem Behälter zu dem Dampfgenerator bereitgestellt ist und wobei die Leitung ein Kreislauf (124) ist und so konfiguriert ist, um Fluid aus dem Behälter zu dem Dampferzeuger und zurück zu dem Behälter zirkulieren zu lassen.

## Revendications

1. Une méthode pour stocker de l'énergie, la méthode comprenant :
(a) fournir un matériau à changement de phase, ayant un point de fusion d'au moins 500 °C, dans un contenant (1, 101) ;
(b) chauffer le matériau à changement de phase afin de causer la fusion d'au moins une partie de celui-ci et ainsi de stocker de la chaleur dans celui-ci :
(c) stocker le matériau à changement de phase pendant une période de temps d'au moins une minute ;
(d) utiliser au moins une partie de la chaleur provenant du matériau à changement de phase comme source d'énergie, la partie de chaleur étant utilisée pour chauffer au moins soit de l'eau, soit de la vapeur dans un générateur de vapeur (5, 105) afin de former un courant de température plus élevée d'au moins soit l'eau, soit la vapeur et le courant de température plus élevée étant utilisé comme source d'énergie, et le courant de température plus élevée du générateur de vapeur étant dirigé vers un générateur de vapeur secondaire (8, 108) où de l'eau relativement froide/de la vapeur est ajoutée au courant de température plus élevée du générateur de vapeur de manière à fournir un courant combiné de vapeur d'une température intermédiaire, et
(e) déplacer le contenant et le matériau à changement de phase d'un premier emplacement à un second emplacement, les premier et second emplacements étant espacés l'un de l'autre d'au moins 10 mètres.

2. Une méthode telle que revendiquée dans la revendication 1, le matériau à changement de phase comprenant un élément quelconque ou plusieurs parmi du fluorure de lithium, du carbonate de sodium, du carbonate de lithium, du chlorure de magnésium, du chlorure de sodium et du chlorure de potassium et la période de temps étant de plus d'1 heure et peut être de plus de 2 heures, de 6 heures ou de plus de 12 heures.

3. Une méthode telle que revendiquée dans n'importe quelle revendication précédente, un fluide de transfert de chaleur transférant la chaleur du matériau à changement de phase à la source d'énergie, le fluide de transfert de chaleur étant fourni dans un circuit (24, 124) pouvant être déplacé entre une zone où il est chauffé par le matériau à changement de phase et une zone où il transfère de la chaleur à la source d'énergie.

4. Une méthode telle que revendiquée dans n'importe quelle revendication précédente, la source d'énergie générée à l'étape (d) fournissant au moins une partie de l'énergie requise pour déplacer le contenant et le matériau à changement de phase du premier emplacement au second emplacement, et au moins une partie de la source d'énergie à l'étape (d) étant générée au second emplacement ou à proximité de celui-ci, et le second emplacement étant sous-marin, à une profondeur d'au moins 100 m, de préférence d'au moins 1 000 m, plus préférablement d'au moins 1 800 m ; tandis que l'étape (b) peut avoir lieu sur un navire.

5. Une méthode telle que revendiquée dans n'importe quelle revendication précédente, deux contenants comprenant chacun un matériau à changement de phase étant fournis ; l'étape (b) étant réalisée hors circuit de l'un desdits contenants tandis que l'étape (d) étant réalisée en utilisant de la chaleur dérivée du matériau à changement de phase dans le second dit contenant ; les premier et second emplacements étant espacés l'un de l'autre d'au moins 100 m, plus préférablement d'au moins 1 000 m et pouvant être espacés l'un de l'autre de plus de 2 000 m ; et l'étape (b) étant réalisée moins fréquemment par comparaison à l'étape (d).

6. Une méthode telle que revendiquée dans n'importe quelle revendication précédente, la vapeur étant chauffée afin de former un courant de vapeur de température plus élevée, et le courant de température plus élevée provenant du générateur de vapeur étant à une température de plus de 200 °C, de préférence de plus de 400 °C, en particulier de plus de 700 °C et, ladite température intermédiaire étant préférablement comprise dans l'intervalle allant de 200 °C à 350 °C.

7. Une méthode telle que revendiquée dans n'importe quelle revendication précédente, le courant de température plus élevée étant utilisé comme source d'énergie par l'injection de la vapeur dans un puits.

8. Une méthode telle que revendiquée dans n'importe quelle revendication précédente, le courant de température plus élevée étant utilisé comme source d'énergie par échange de chaleur avec un liquide visqueux dans un contenant submergé, de préférence par un échange de chaleur indirect, et le liquide visqueux comprenant des hydrocarbures et le contenant submergé étant un navire qui a coulé.

9. Une méthode telle que revendiquée dans n'importe quelle revendication précédente, comprenant la récupération d'au moins une partie de la vapeur sous forme de vapeur ou d'eau, et facultativement l'utilisation de la vapeur/l'eau récupérée afin de répéter l'étape consistant à former un courant de température plus élevée d'au moins soit l'eau, soit la vapeur, et le courant de température plus élevée étant utilisé comme source d'énergie.

10. Un véhicule comprenant :
un mécanisme conçu pour extraire de la chaleur d'un matériau à changement de phase à une température d'au moins 500 °C et pour utiliser ladite chaleur comme source d'énergie ;
un générateur de vapeur (105) alimenté par le matériau à changement de phase ;
un générateur de vapeur secondaire (108), le générateur de vapeur secondaire étant fourni en aval du générateur de vapeur et raccordé à celui-ci, et étant conçu pour diminuer la température de la vapeur fournie par le générateur de vapeur,
et le véhicule pouvant fonctionner pour déplacer le véhicule d'un premier emplacement à un second emplacement, les premier et second emplacements étant espacés l'un de l'autre d'au moins 10 mètres.

11. Véhicule tel que revendiqué dans la revendication 10, comprenant un contenant (101) comprenant un matériau à changement de phase et/ou un système de sortie d'énergie (117) ayant au moins un élément parmi une sortie de vapeur, un échangeur de chaleur, une turbine et un moteur.

12. Véhicule tel que revendiqué dans n'importe laquelle des revendications 10 à 11, la chaleur stockée par ledit mécanisme étant utilisée pour déplacer le véhicule du premier emplacement au second emplacement.

13. Véhicule tel que revendiqué dans n'importe laquelle des revendications 10 à 12, la source d'énergie pouvant fonctionner pour alimenter un moteur Stirling.

14. Véhicule tel que revendiqué dans les revendications 10 à 13, le générateur de vapeur comprenant un générateur de vapeur monotube.

15. Véhicule tel que revendiqué dans la revendication 10 ou la revendication 14, un conduit étant fourni pour transférer un fluide du contenant au générateur de vapeur et le conduit étant un circuit (124) et étant dès lors configuré de manière à faire circuler un fluide du contenant au générateur de vapeur et pour le faire revenir au contenant.
